(19) Europäisches Patentamt
European Patent Office
Office européen des brevets

(11) **EP 2 958 223 A1**

(12) **EUROPEAN PATENT APPLICATION**
published in accordance with Art. 153(4) EPC

(43) Date of publication:
**23.12.2015 Bulletin 2015/52**

(51) Int Cl.:
***H02M 7/12*** *(2006.01)*

(21) Application number: **13875164.9**

(22) Date of filing: **14.02.2013**

(86) International application number:
**PCT/JP2013/053509**

(87) International publication number:
**WO 2014/125594 (21.08.2014 Gazette 2014/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Toshiba Mitsubishi-Electric
Industrial Systems Corporation
Tokyo 104-0031 (JP)**

(72) Inventors:
• **OGINO, Hiroshi**
**Tokyo 104-0031 (JP)**

• **ANDO, Akinobu**
**Tokyo 104-0031 (JP)**
• **HOSOKAWA, Yasuhiko**
**Tokyo 104-0031 (JP)**
• **OKUYAMA, Ryota**
**Tokyo 104-0031 (JP)**

(74) Representative: **Piotrowicz, Pawel Jan Andrzej
Venner Shipley LLP
Byron House
Cambridge Business Park
Cowley Road
Cambridge CB4 0WZ (GB)**

(54) **POWER-CONVERSION DEVICE AND METHOD FOR CONTROLLING SAME**

(57)     A power conversion device includes a converter (1) which converts AC power supplied from an AC power source (e1) into DC power, a DC reactor (3), and an inverter (2) which converts the DC power provided from the converter (1) through the DC reactor (3) into AC power and supplies the AC power to a load. A control unit (20) controls the converter (1) according to a sum of a feedback control amount and a feedforward control amount, the feedback control amount being calculated based on a deviation between a current command value and the DC current flowing into the DC reactor (3), the feedforward control amount being set in accordance with a DC voltage provided from the converter (1) through the DC reactor (3). When an output frequency of the inverter (2) is in a first region, the control unit (20) reduces a control gain used to calculate the feedforward control amount, as compared to when the output frequency is in a second region having a frequency lower than that of the first region.

FIG.1

**Description**

TECHNICAL FIELD

The present invention relates to a power conversion device and a control method therefor, and is suitably used, for example, for a thyristor starting device which starts a synchronous machine.

BACKGROUND ART

A thyristor starting device includes a converter which converts three-phase alternating current (AC) power into direct current (DC) power, a DC reactor which smooths a DC current, and an inverter which converts the DC power provided from the converter through the DC reactor into three-phase AC power having a desired frequency, and provides the three-phase AC power to a synchronous machine. As disclosed for example in Japanese Patent Laying-Open No. 2001-37236 (PTD 1), the thyristor starting device includes an AC current detector which detects a three-phase AC current to be input to the converter, an AC voltage detector which detects a three-phase AC voltage output from the inverter, and a control circuit which controls the converter and the inverter based on detection results of the AC current detector and the AC voltage detector. By controlling the three-phase AC power to be provided to the synchronous machine, the synchronous machine in a stopped state can be started and rotationally driven at a prescribed rotation speed.

CITATION LIST

PATENT DOCUMENT

PTD 1: Japanese Patent Laying-Open No. 2001-37236

SUMMARY OF INVENTION

TECHNICAL PROBLEM

In such a thyristor starting device, the current flowing into the DC reactor has a waveform in which ripples (AC components) are superimposed on a DC current due to switching of a plurality of thyristors included in the inverter. The ripples in this DC current become larger as a load of the inverter increases.

On the other hand, in the thyristor starting device, the converter is current-controlled according to a prescribed current command value, as described in PTD 1. This current control is performed by feedback control for matching the DC current flowing into the DC reactor to the current command value. Therefore, when the load of the inverter increases as described above, it has been difficult to cause a DC voltage which is to be provided to the inverter to immediately follow the change of the load.

Due to such low control responsiveness, it has been necessary for a conventional thyristor starting device to install a DC reactor having a high inductance in order to suppress ripples in a DC current. This leads to increases in the size and cost of the device.

Accordingly, a main object of the present invention is to provide a power conversion device using a small-sized and low-cost DC reactor, and a control method therefor.

SOLUTION TO PROBLEM

According to an aspect of the present invention, a power conversion device includes: a converter which converts AC power supplied from an AC power source into DC power; a DC reactor which smooths a DC current; an inverter which converts the DC power provided from the converter through the DC reactor into AC power, and supplies the AC power to a load; and a control unit which controls the converter according to a sum of a feedback control amount and a feedforward control amount, the feedback control amount being calculated based on a deviation between a current command value and the DC current flowing into the DC reactor, the feedforward control amount being set in accordance with a DC voltage provided from the converter through the DC reactor. When an output frequency of the inverter is in a first region, the control unit reduces a control gain used to calculate the feedforward control amount, as compared to when the output frequency is in a second region having a frequency lower than that of the first region.

According to another aspect of the present invention, provided is a control method for a power conversion device, the power conversion device including a converter which converts AC power supplied from an AC power source into DC power, a DC reactor which smooths a DC current, and an inverter which converts the DC power provided from the converter through the DC reactor into AC power, and supplies the AC power to a load. The control method for the power conversion device includes the steps of: controlling the converter according to a sum of a feedback control amount and a feedforward control amount, the feedback control amount being calculated based on a deviation between a current command value and the DC current flowing into the DC reactor, the feedforward control amount being set in accordance with a DC voltage provided from the converter through the DC reactor; and reducing a control gain used to calculate the feedforward control amount, when an output frequency of the inverter is in a first region, as compared to when the output frequency is in a second region having a frequency lower than that of the first region.

ADVANTAGEOUS EFFECTS OF INVENTION

In the power conversion device in accordance with the present invention, since the inductance of the DC reactor can be reduced, a small-sized and low-cost device can be achieved.

BRIEF DESCRIPTION OF DRAWINGS

Fig. 1 is a view showing a configuration of a thyristor starting device as a representative example of a power conversion device in accordance with an embodiment of the present invention.

Fig. 2 is a view illustrating an example of a configuration of a control block for implementing current control of a converter control unit in Fig. 1.

Fig. 3 is a view showing the relation between the effect of suppressing ripples by current control of a converter and the output frequency of an inverter 2 in accordance with the present embodiment.

Fig. 4 is a block diagram showing an example of a configuration of a gain multiplication unit in Fig. 2.

Fig. 5 is a conceptual diagram illustrating a first example of setting of a gain in the gain multiplication unit.

Fig. 6 is a conceptual diagram illustrating a second example of setting of a gain in the gain multiplication unit.

Fig. 7 is a conceptual diagram illustrating a third example of setting of a gain in the gain multiplication unit.

DESCRIPTION OF EMBODIMENTS

Hereinafter, an embodiment of the present invention will be described with reference to the drawings. It is noted that identical or corresponding parts in the drawings will be designated by the same reference numerals, and the description thereof will not be repeated.

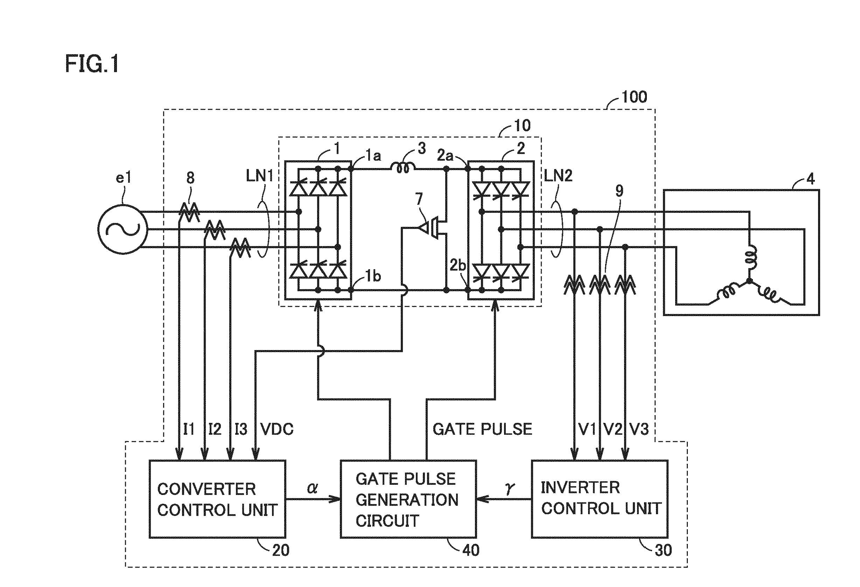

Fig. 1 is a view showing a configuration of a thyristor starting device as a representative example of a power conversion device in accordance with an embodiment of the present invention.

Referring to Fig. 1, a thyristor starting device 100 receives three-phase AC power from an AC power source e1, and starts a synchronous machine 4. Thyristor starting device 100 includes a power conversion unit 10, an AC current detector 8, an AC voltage detector 9, a converter control unit 20, an inverter control unit 30, and a gate pulse generation circuit 40. Thyristor starting device 100 further includes a DC voltage detector 7, AC current detector 8, and AC voltage detector 9.

Power conversion unit 10 receives the three-phase AC power from AC power source e1 through a power line LN1. AC current detector 8 detects a three-phase AC current to be supplied to power conversion unit 10, and outputs current detection values I1, I2, I3 to converter control unit 20.

Power conversion unit 10 includes a converter 1, an inverter 2, and a DC reactor 3. Converter 1 converts the three-phase AC power from AC power source e1 into DC power. Converter 1 is a three-phase full wave rectifying circuit including at least six thyristors. Each thyristor receives, at its gate, a gate pulse from converter control unit 20. The three-phase AC power can be converted into the DC power by turning on the six thyristors at prescribed timing.

DC reactor 3 is connected between a high voltage-side output terminal 1a of converter 1 and a high voltage-side input terminal 2a of inverter 2 to smooth a DC current. A low voltage-side output terminal 1b of converter 1 is directly connected to a low voltage-side input terminal 2b of inverter 2.

DC voltage detector 7 detects a DC voltage VDC between input terminals 2a and 2b of inverter 2, and outputs voltage detection value VDC to converter control unit 20.

Inverter 2 converts the DC power provided from converter 1 through DC reactor 3 into three-phase AC power having a desired frequency. Inverter 2 includes at least six thyristors. Each thyristor receives, at its gate, a gate pulse from inverter control unit 30. The DC power can be converted into the three-phase AC power having a desired frequency by turning on the six thyristors at prescribed timing.

The three-phase AC power generated by inverter 2 is provided to synchronous machine 4 through a power line LN2. When synchronous machine 4 has two poles, the rotation speed during a normal operation is 3000 rpm to 3600 rpm.

Synchronous machine 4 includes three-phase coils. The three-phase coils are each connected to power line LN2. When the three-phase AC power is supplied to the three-phase coils, a rotating magnetic field is generated and synchronous machine 4 rotates.

AC voltage detector 9 detects a three-phase AC voltage to be supplied to the three phase coils of synchronous machine 4, and outputs voltage detection values V1, V2, V3 to inverter control unit 30.

Converter control unit 20 controls converter 1, based on current detection values I1, I2, I3 received from AC current detector 8 and DC voltage VDC received from DC voltage detector 7. Specifically, converter control unit 20 current-controls converter 1 such that the DC current flowing into DC reactor 3 matches a prescribed current command value Id*. Using a method described later, converter control unit 20 calculates a phase control angle (firing angle) $\alpha$ based on current detection values I1, I2, I3 and voltage detection value VDC, and outputs calculated phase control angle $\alpha$ to gate pulse generation circuit 40. Gate pulse generation circuit 40 generates the gate pulse to be provided to the gates of the thyristors of converter 1, based on phase control angle $\alpha$ received from converter control unit 20.

Inverter control unit 30 controls inverter 2, based on voltage detection values V1, V2, V3 received from AC voltage detector 9. Inverter control unit 30 includes a rotor position detection unit not shown. The rotor position detection unit detects a rotation position of a rotor of synchronous machine 4, based on voltage detection values V1, V2, V3 received from AC voltage detector 9. Inverter control unit 30 calculates a phase control angle (firing angle) γ based on the detected rotation position of the rotor, and outputs calculated phase control angle γ to gate pulse generation circuit 40. Gate pulse generation circuit 40 generates the gate pulse to be provided to the gates of the thyristors of inverter 2, based on phase control angle γ received from inverter control unit 30.

Such a thyristor starting device is used, for example in a power plant, to start a synchronous generator in a stopped state, as a synchronous motor. With the synchronous generator being rotationally driven as the synchronous motor at a prescribed rotation number, the thyristor starting device is separated from the synchronous generator, and the synchronous generator is rotationally driven by a gas turbine or the like to generate AC power.

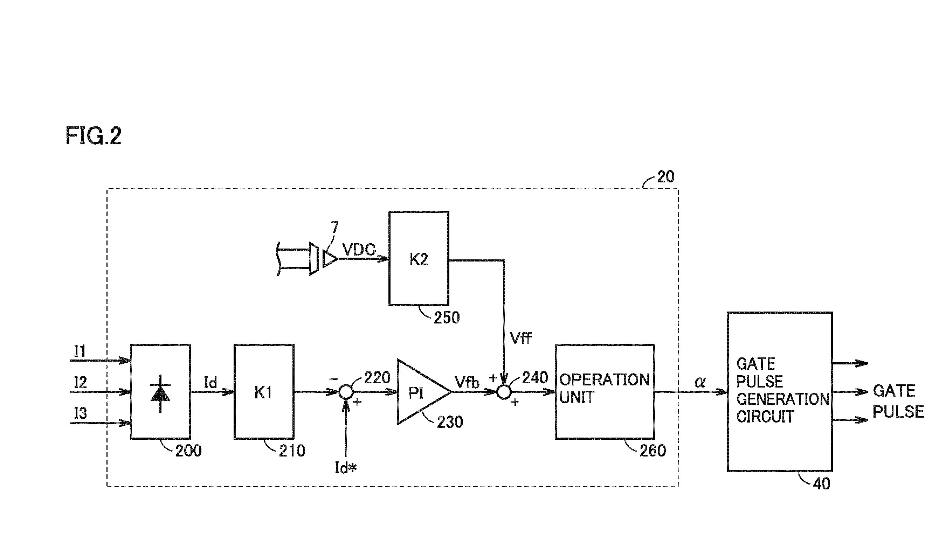

Fig. 2 is a view illustrating an example of a configuration of a control block for implementing current control of converter control unit 20 in Fig. 1.

Referring to Fig. 2, converter control unit 20 includes a rectification circuit 200, gain multiplication units 210 and 250, a subtraction unit 220, a PI operation unit 230, an addition unit 240, and an operation unit 260.

Rectification circuit 200 receives current detection values I1, I2, I3 from AC current detector 8. Rectification circuit 200 uses a full wave rectifying-type diode rectifier, and converts current detection values I1, I2, I3 into a DC current Id.

Gain multiplication unit 210 multiplies DC current Id from rectification circuit 200 by a gain K1, and outputs the result to subtraction unit 220. The value obtained by multiplying DC current Id by gain K1 is proportional to the DC current flowing into DC reactor 3.

Subtraction unit 220 calculates a current deviation ΔId between current command value Id* and a DC current K1·Id, and outputs calculated current deviation ΔId to PI operation unit 230. Current command value Id* is a target value of the DC current, and is a control command set in accordance with the operation state of synchronous machine 4. PI operation unit 230 generates a PI output in accordance with current deviation ΔId, according to prescribed proportional gain and integral gain. PI operation unit 230 constitutes a current feedback control element.

Specifically, PI operation unit 230 includes a proportional element (P), an integral element (I), and an addition unit. The proportional element multiplies current deviation ΔId by the prescribed proportional gain, and outputs the result to the addition unit. The integral element integrates current deviation ΔId with the prescribed integral gain, and outputs the result to the addition unit. The addition unit adds the outputs from the proportional element and the integral element to generate the PI output. This PI output is equivalent to a feedback control amount Vfb for implementing the current control. It is noted that, although PI operation is illustrated as an operation of the feedback control amount, the feedback control amount can also be calculated by another control operation.

Gain operation unit 250 receives DC voltage VDC from DC voltage detector 7. Gain multiplication unit 250 multiplies DC voltage VDC by a gain K2, and outputs the result to addition unit 240. This output K2·VDC of gain multiplication unit 250 is equivalent to a feedforward control amount Vff in the current control.

Addition unit 240 adds the outputs from PI operation unit 230 and gain multiplication unit 250 to generate a voltage command value for the current control. This voltage command value is a control command which defines a voltage value of the DC power to be output by converter 1.

Operation unit 260 calculates phase control angle α using the voltage command value provided from addition unit 240. Here, if an overlap angle is ignored, an average value $E_{d\alpha}$ of DC voltage VDC is provided by the following equation (1):

$$E_{d\alpha}=1.35E_s\cos\alpha \ ... \ (1),$$

where $E_s$ is an effective value of a line voltage of AC power source e1.

Operation unit 260 calculates phase control angle α by assigning the voltage command value provided from addition unit 240 to $E_{d\alpha}$ of this equation (1). Operation unit 260 outputs calculated phase control angle α to gate pulse generation circuit 40.

Gate pulse generation circuit 40 generates the gate pulse to be provided to the thyristors of converter 1, based on phase control angle α. By switching-controlling converter 1 according to the gate pulse generated by gate pulse generation circuit 40, a DC current according to current command value Id* is output from converter 1.

In this manner, converter control unit 20 applies feedforward control based on DC voltage VDC to a feedback control system for matching the DC current to current command value Id*. This can cause converter 1 to immediately output a DC voltage which counters a change of ripples in DC voltage VDC caused by switching of inverter 2. As a result, ripples in the DC current can be prevented from being increased.

On the other hand, the ripples in DC voltage VDC are dependent on the output frequency of inverter 2, and the ripples in DC voltage VDC become smaller as the output frequency of inverter 2 becomes higher. Therefore, if the feedforward control described above is also applied when inverter 2 has a high output frequency, the ripples in the DC current may be increased contrarily.

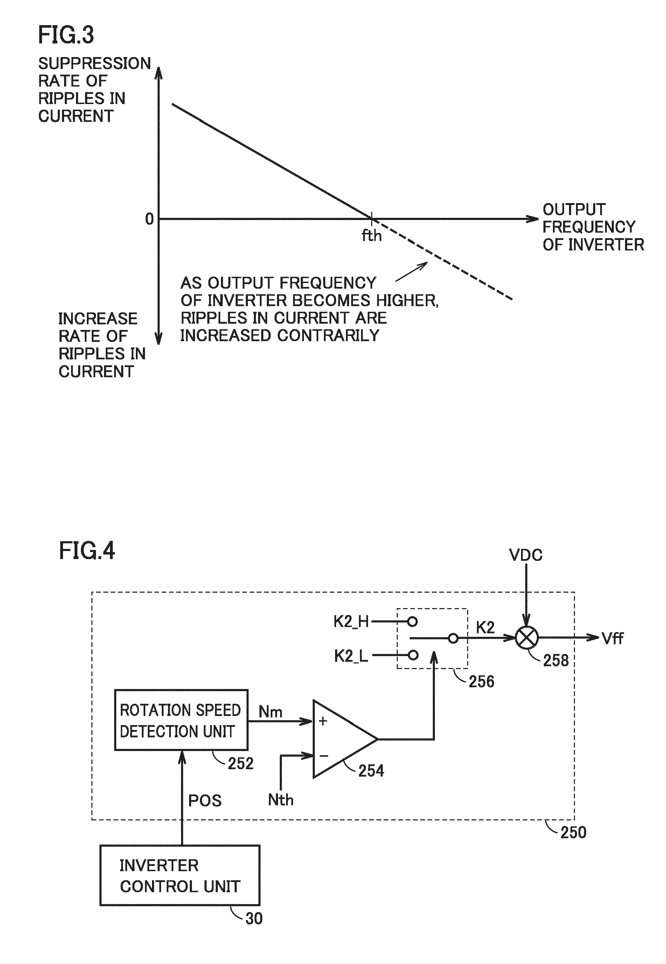

Fig. 3 shows the relation between the effect of suppressing ripples by current control of converter 1 and the output frequency of inverter 2 in accordance with the present embodiment. In Fig. 3, the axis of ordinates represents a suppression rate and an increase rate of the ripples in the DC current, and the axis of abscissas represents the output frequency of inverter 2. It is noted that the suppression rate of the ripples in the DC current is equivalent to an amount of decrease of a ripple rate, which is a rate of an AC component to a DC component, resulting from the application of the feedforward control. Further, the increase rate of the ripples in the DC current is equivalent to an amount of increase of the ripple rate resulting from the application of the feed forward control.

Referring to Fig. 3, the suppression rate of the ripples in the DC current decreases as the output frequency of inverter 2 becomes higher. This is because, when the output frequency of inverter 2 becomes higher than the frequency of the AC power input from AC power source e1 to converter 1, the current control of converter 1 cannot catch up with the increase of the output frequency, and the effect of the feedforward control is weakened.

On the other hand, the ripple rate in the DC current decreases as the output frequency of inverter 2 becomes higher. Therefore, as shown in Fig. 3, when the output frequency of the inverter 2 exceeds a frequency fth, the change of the ripple rate resulting from the application of the feedforward control shifts from decrease to increase. Namely, when the output frequency of inverter 2 is frequency fth, the ripple rate in the DC current when the feedforward control is performed is equal to the ripple rate in the DC current when the feedforward control is not performed. In addition, when the output frequency of inverter 2 becomes higher than frequency fth, the ripples in the DC current are increased due to the application of the feedforward control, leading to an opposite effect. In the following description, a region in which the output frequency of inverter 2 becomes higher than frequency fth will also be referred to as a "high frequency region", and a region in which the output frequency of inverter 2 is less than or equal to frequency fth will also be referred to as a "low frequency region".

In the power conversion device in accordance with the embodiment of the present invention, gain K2 used to calculate the feedforward control amount is set to be variable in accordance with the output frequency of inverter 2. Specifically, converter control unit 20 changes gain K2 in accordance with a result of determination of whether or not the output frequency of inverter 2 is in the high frequency region.

Fig. 4 is a block diagram showing an example of a configuration of gain multiplication unit 250 in Fig. 2.

Referring to Fig. 4, gain multiplication unit 250 includes a rotation speed detection unit 252, a comparator 254, a switch 256, and a multiplication unit 258.

Rotation speed detection unit 252 receives, from the rotor position detection unit (not shown) within inverter control unit 30, a rotation position signal POS indicating the position of the rotor of synchronous machine 4. Rotation speed detection unit 252 detects a rotation speed Nm of the rotor of synchronous machine 4, based on rotation position signal POS. Rotation speed Nm of the rotor of synchronous machine 4 corresponds to the output frequency of inverter 2.

Comparator 254 compares rotation speed Nm of the rotor of synchronous machine 4 with a prescribed threshold value Nth, and outputs a comparison result. When rotation speed Nm exceeds threshold value Nth, an output signal of comparator 254 is at an H (logical high) level, and when rotation speed Nm is less than or equal to threshold value Nth, the output signal of comparator 254 is at an L (logical low) level. Threshold value Nth input to comparator 254 is set based on frequency fth in Fig. 3.

Switch 256 selects either one of a gain K2_H and a gain K2_L in accordance with the output signal of comparator 254, and outputs the selected gain to multiplication unit 258, as gain K2. Specifically, gain K2_H and gain K2_L are values different from each other, and gain K2_H is set to be higher than gain K2_L (K2_H>K2_L). When the output signal of comparator 254 is at an H level, that is, when rotation speed Nm of the rotor of synchronous machine 4 is higher than threshold value Nth, switch 256 selects gain K2_L. On the other hand, when the output signal of comparator 254 is at an L level, that is, when rotation speed Nm of the rotor of synchronous machine 4 is less than or equal to threshold value Nth, switch 256 selects gain K2_H.

Multiplication unit 258 calculates feedforward control amount Vff by multiplying DC voltage VDC from DC voltage detector 7 by gain K2.

In this manner, gain multiplication unit 250 sets gain K2 used to calculate feedforward control amount Vff to be variable in accordance with the result of determination of whether or not the output frequency of inverter 2 is in the high frequency region. When the output frequency of inverter 2 is in the high frequency region, gain multiplication unit 250 reduces gain K2, as compared to when the output frequency of inverter 2 is in the low frequency region. Therefore, in the high frequency region, feedforward control amount Vff set based on the same DC voltage VDC becomes smaller than that in the low frequency region. This can suppress the increase of the ripples in the DC current in the high frequency region.

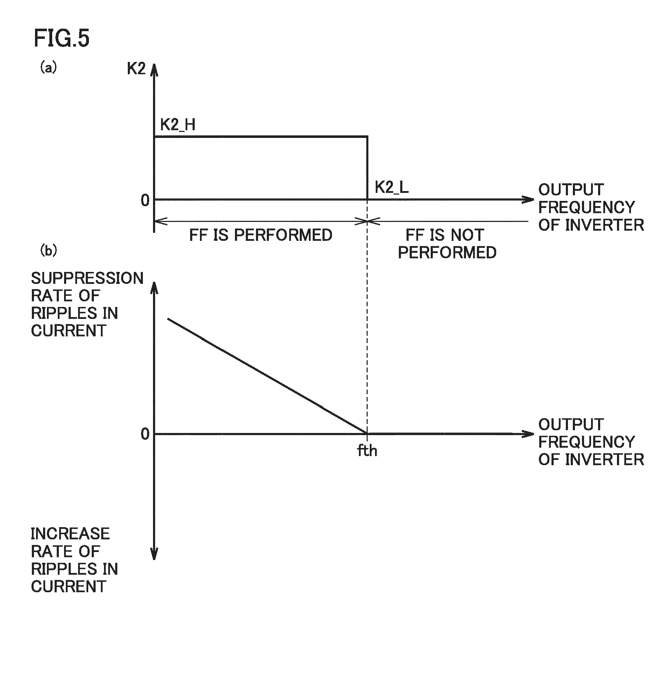

Hereinafter, details of setting of gain K2 in gain multiplication unit 250 will be described with reference to Figs. 5 to 7.

Fig. 5 is a conceptual diagram illustrating a first example of setting of gain K2 in gain multiplication unit 250.

Referring to Fig. 5(a), gain multiplication unit 250 sets gain K2_L in the high frequency region to zero. Namely, when the output frequency of inverter 2 is in the low frequency region, the feedforward control is performed, and when the output frequency of inverter 2 is in the high frequency region, the feedforward control is substantially not performed (invalidated) by setting feedforward control amount Vff to zero.

Fig. 5(b) shows the relation between the effect of suppressing ripples in the DC current by the setting of gain K2 shown in Fig. 5 (a) and the output frequency of inverter 2. Referring to Fig. 5(b), the suppression rate of the ripples in the DC current is maintained at zero in the high frequency region. By not performing the feedforward control in the high frequency region, the increase of the ripples in the DC current as shown in Fig. 3 can be suppressed.

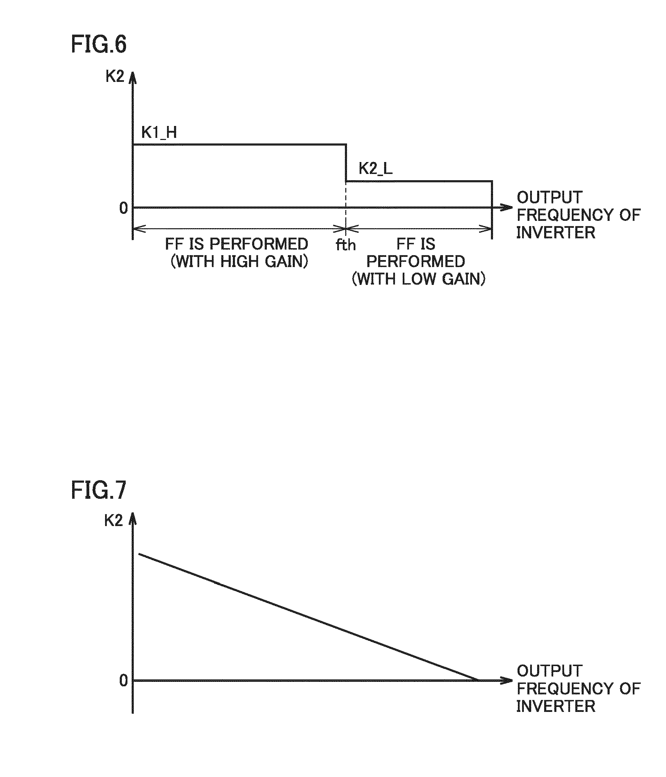

Fig. 6 is a conceptual diagram illustrating a second example of setting of gain K2 in gain multiplication unit 250.

Referring to Fig. 6, gain multiplication unit 250 sets gain K2_L in the high frequency region to a positive value smaller than gain K2_H (0<K2_L<K2_H). Namely, when the output frequency of inverter 2 is in the high frequency region, the feedforward control is performed with gain K2 being reduced as compared to when the output frequency of inverter 2 is in the low frequency region. It is noted that gain K2_L is predetermined to a value appropriate for suppressing the ripples in the DC current, in accordance with the magnitude of the ripples in DC voltage VDC.

Fig. 7 is a conceptual diagram illustrating a third example of setting of gain K2 in gain multiplication unit 250.

Referring to Fig. 7, gain K2 is set to be smaller as the output frequency of inverter 2 becomes higher. Gain K2 is predetermined, through experiments and the like, for each output frequency of inverter 2, such that the suppression rate of the ripples in the DC current resulting from the application of the feedforward control becomes highest.

As has been described above, in the power conversion device in accordance with the present embodiment, in the current control of the converter, a control gain used for the feedforward control based on DC voltage VDC is reduced as the output frequency of the inverter becomes higher. This can suppress the ripples in the DC current from being increased by the feedforward control in the high frequency region in which the ripples in DC voltage VDC becomes smaller.

Further, by setting the control gain used for the feedforward control to be variable in accordance with the output frequency of the inverter, the ripples in the DC current can be decreased by the current control of the converter, over the range of the output frequency of the inverter. Thereby, there is no need to increase the inductance of the DC reactor, and thus a small-sized and low-cost thyristor starting device can be achieved.

It is noted that, although the above embodiment has described the configuration in which feedforward control amount Vff is set in accordance with voltage detection value VDC received from DC voltage detector 7, there may be adopted a configuration in which DC voltage VDC is calculated based on three-phase AC voltages V1, V2, V3 detected by AC voltage detector 9. In this case, there is no need to provide DC voltage detector 7, and thus a smaller-sized and lower-cost device can be achieved.

It should be understood that the embodiment disclosed herein is entirely illustrative and non-restrictive. Application of the present invention is defined by the scope of the claims, rather than the description above, and is intended to include any modifications within the scope and meaning equivalent to the scope of the claims.

REFERENCE SIGNS LIST

1: converter; 2: inverter; 3: DC reactor; 4: synchronous machine; 7: DC voltage detector; 8: AC current detector; 9: AC voltage detector; 10: power conversion unit; 20: converter control unit; 30: inverter control unit; 40: gate pulse generation circuit; 100: thyristor starting device; 200: rectification circuit; 210, 250: gain multiplication unit; 220: subtraction unit; 230: PI operation unit; 240: addition unit; 252: rotation speed detection unit; 254: comparator; 256: switch; 258: multiplication unit; 260: operation unit; e1: AC power source.

## Claims

1. A power conversion device, comprising:

   a converter which converts AC power supplied from an AC power source into DC power;
   a DC reactor which smooths a DC current;
   an inverter which converts the DC power provided from said converter through said DC reactor into AC power, and supplies the AC power to a load; and
   a control unit which controls said converter according to a sum of a feedback control amount and a feedforward control amount, the feedback control amount being calculated based on a deviation between a current command value and the DC current flowing into said DC reactor, the feedforward control amount being set in accordance with a DC voltage provided from said converter through said DC reactor,
   when an output frequency of said inverter is in a first region, said control unit reducing a control gain used to calculate said feedforward control amount, as compared to when said output frequency is in a second region having a frequency lower than that of said first region.

2. The power conversion device according to claim 1, wherein, when the output frequency of said inverter is in said first region, said control unit does not perform feedforward control based on said voltage detection value, and when the output frequency of said inverter is in said second region, said control unit performs said feedforward control.

3. The power conversion device according to claim 1, wherein said control unit reduces said control gain as the output frequency of said inverter becomes higher.

4. The power conversion device according to any one of claims 1 to 3, further comprising:

an AC current detector which detects an AC current supplied from said AC power source;
a rectification circuit which rectifies an output of said AC current detector; and
a DC voltage detector which detects a DC voltage between a high voltage-side input terminal and a low voltage-side input terminal of said inverter, wherein
said control unit calculates said feedback control amount based on a deviation between said current command value and a DC current from said rectification circuit, and sets said feedforward control amount in accordance with a voltage detection value received from said DC voltage detector.

5. A control method for a power conversion device, said power conversion device including
a converter which converts AC power supplied from said AC power source into DC power,
a DC reactor which smooths a DC current, and
an inverter which converts the DC power provided from said converter through said DC reactor into AC power, and supplies the AC power to a load,
said control method comprising the steps of:

controlling said converter according to a sum of a feedback control amount and a feedforward control amount, the feedback control amount being calculated based on a deviation between a current command value and the DC current flowing into said DC reactor, the feedforward control amount being set in accordance with a DC voltage provided from said converter through said DC reactor; and
reducing a control gain used to calculate said feedforward control amount, when an output frequency of said inverter is in a first region, as compared to when said output frequency is in a second region having a frequency lower than that of said first region.

FIG.1

FIG.2

# FIG.3

SUPPRESSION
RATE OF
RIPPLES IN
CURRENT

0

fth

OUTPUT
FREQUENCY
OF INVERTER

AS OUTPUT FREQUENCY
OF INVERTER BECOMES HIGHER,
RIPPLES IN CURRENT ARE
INCREASED CONTRARILY

INCREASE
RATE OF
RIPPLES IN
CURRENT

# FIG.4

VDC

K2_H

K2_L

K2

Vff

258

256

ROTATION SPEED
DETECTION UNIT

252

Nm

+

−

254

250

POS

Nth

INVERTER
CONTROL UNIT

30

FIG.5

(a)

K2

K2_H

0

K2_L

OUTPUT
FREQUENCY
OF INVERTER

FF IS PERFORMED

FF IS NOT
PERFORMED

(b)

SUPPRESSION
RATE OF
RIPPLES IN
CURRENT

0

fth

OUTPUT
FREQUENCY
OF INVERTER

INCREASE
RATE OF
RIPPLES IN
CURRENT

FIG.6

K2

K1_H

K2_L

0 → OUTPUT FREQUENCY OF INVERTER

FF IS PERFORMED (WITH HIGH GAIN)   fth   FF IS PERFORMED (WITH LOW GAIN)

FIG.7

K2

0 → OUTPUT FREQUENCY OF INVERTER

12

## INTERNATIONAL SEARCH REPORT

| International application No. |
| --- |
| PCT/JP2013/053509 |

A. CLASSIFICATION OF SUBJECT MATTER
*H02M7/12(2006.01)i*

According to International Patent Classification (IPC) or to both national classification and IPC

B. FIELDS SEARCHED

Minimum documentation searched (classification system followed by classification symbols)
H02M7/12

Documentation searched other than minimum documentation to the extent that such documents are included in the fields searched

| Jitsuyo Shinan Koho | 1922–1996 | Jitsuyo Shinan Toroku Koho | 1996–2013 |
| Kokai Jitsuyo Shinan Koho | 1971–2013 | Toroku Jitsuyo Shinan Koho | 1994–2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 7-288980 A (Toyo Electric Mfg. Co., Ltd.), 31 October 1995 (31.10.1995), entire text (Family: none) | 1-5 |
| A | JP 2001-37236 A (Mitsubishi Electric Corp.), 09 February 2001 (09.02.2001), entire text (Family: none) | 1-5 |
| A | JP 2011-147216 A (Fuji Electric Co., Ltd.), 28 July 2011 (28.07.2011), entire text (Family: none) | 1-5 |

☐ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 01 May, 2013 (01.05.13) | 14 May, 2013 (14.05.13) |

| Name and mailing address of the ISA/<br>Japanese Patent Office | Authorized officer |
| --- | --- |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001037236 A